# EUROPEAN PATENT APPLICATION

(11) **EP 2 796 292 A1**
(43) Date of publication of application: **29.10.2014**
(21) Application number: 13185746.8
(22) Date of filing: 24.09.2013
(51) Int. Cl.: B32B 38/16, B32B 37/00, B32B 27/12, D06N 3/00, B32B 37/26

(54) **Stacked artificial leather making machine**

(30) Priority: 24.04.2013 CN 201310144504
(71) Applicant: Dongguan King Full Machinery Co., Ltd., 523000 Dongguan Guangdong (CN)
(72) Inventor: Li, Zhi, 523000 Dongguan (CN)
(74) Representative: Decamps, Alain René François

(57) **Abstract**

The invention relates to the technical field of artificial leather making machines, in particular to a stacked artificial leather making machine, which comprises a laminating wheelset (5), a drying oven (7) and a plurality of coating wheelsets (4), wherein the coating wheelsets (4) are disposed at an inlet end of the drying oven (7) in the production line and are arranged longitudinally; multilayer drying tunnels (6) are formed in the drying oven (7); the coating wheelsets (4) are disposed aside the drying tunnels (6); various drying tunnels (6) are transversely mounted and longitudinally arranged; the laminating wheelset (5) is formed by a plurality of rollers arranged longitudinally; the distance between various rollers may be mutually adjusted; and the conversion between wet laminating and dry laminating can be achieved by the adjustment of the distance between the rollers.

## Description

### FIELD OF THE INVENTION

The invention relates to the technical field of artificial leather making machines, in particular to a stacked artificial leather making machine.

### BACKGROUND OF THE INVENTION

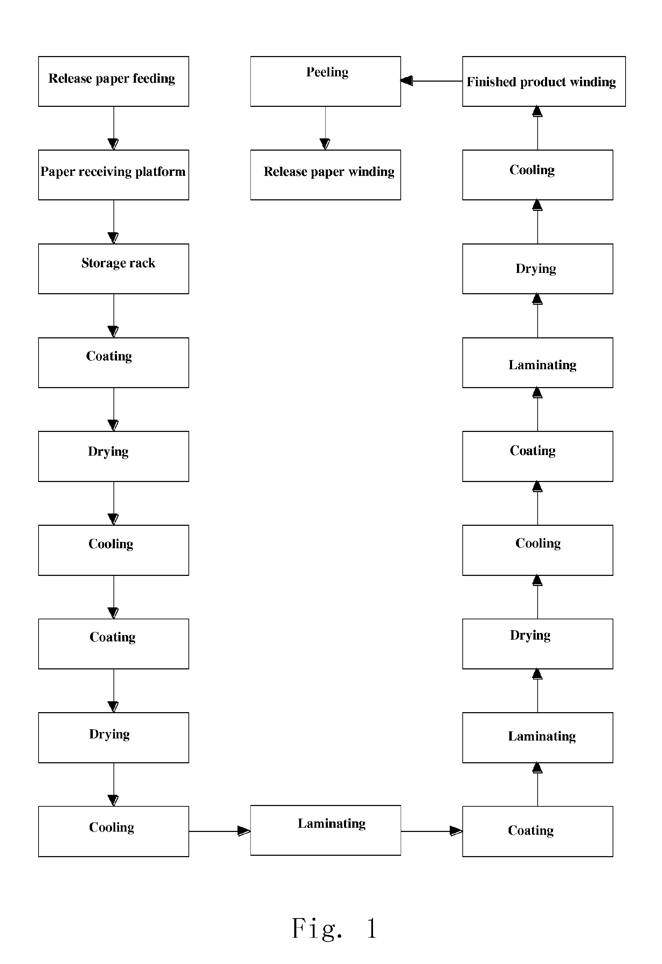

The production line of the traditional artificial leather manufacturing machine is linear, namely a coating part and a drying part in each group are independent from each other, and the production process is also linear. Due to the structure, the production line formed by various making machines is very long, typically 80 to 100 m, and the floor space of the machines is very large. Meanwhile, due to the long production line, the operations are extremely inconvenient and hence more operators must be equipped. Moreover, due to the linear arrangement structure, more than two groups of independent drying ovens are required, which may be relatively wasteful of energy. Furthermore, due to the linear structure of the production line, the transmission line of the machines may be longer. As shown in FIG. 1, the current manufacturing process requires drying for a plurality of times and various devices are in pipelined linear arrangement, so that the floor space is very large. Although the precise transmission can be achieved in the prior art, the cost of such driving systems tend to be high. In addition, due to the linear structure of the production line, the machine is huge, and thus the manufacturing cost of the machine is very high.

Currently, the linear arrangement structure is widely used by most manufacturers. However, due to the above defects, many manufacturers are looking for a better solution.

The Chinese utility patent No. 200620063803.2, titled "one-process finished front and back multilayer coating machine", discloses a one-process finished front and back multilayer coating machine, which comprises a body, an unwinding mechanism, a calendaring part, a winding mechanism and at least two coating mechanisms, wherein various mechanism are all arranged on the body; and each coating mechanism comprises an extrusion mechanism, a drying mechanism and a cooling roll, and various components are arranged in sequence along the vertical direction of the body from the bottom up, namely the extrusion mechanism, the drying mechanism and the cooling roll are arranged from the bottom up in sequence. In the patent, as various components of the coating mechanisms are arranged along the vertical direction of the body, the front and back coating for a plurality of times can be finished in one process.

Although the floor space can be reduced as the coating machine disclosed by the patent is substantially arranged vertically, the coating effect is poor as raw materials are driven to move vertically from the bottom up or from the top down due to the fact that various mechanisms such as the drying mechanism are also arranged vertically. Moreover, in the patent document, the drying mechanism is required to include an upper drying oven and a lower drying oven, which increases the complexity of the machine and is not conducive to energy conservation. In addition, as the upper and lower drying ovens are in staggered arrangement, the assembly of the machine is more complicated. Furthermore, as the coating mechanisms and various groups of drying devices in the patent document are arranged horizontally but the drying devices in a single group are arranged vertically, a plurality of drying devices have to be independently arranged, which is not conducive for energy conservation. In addition, as the height of the drying oven is restricted, the drying effect is affected and the drying operation is not easy.

### SUMMARY OF THE INVENTION

The objective of the invention is to provide a stacked artificial leather making machine aiming at overcoming the defects in the prior art. The stacked artificial leather making machine has the advantages of saving the floor space of the machine, being simple in operation and control, and saving operators.

In order to achieve the above obj ective, the invention adopts the technical proposal that:
The stacked artificial leather making machine comprises coating wheelsets, a laminating wheelset and a drying oven, wherein the coating wheelsets are disposed at an inlet end of the drying oven in the production line, namely various devices in the making machine provided by the invention are linearly arranged and the coating wheelsets are disposed at the inlet end of the drying oven in view of the production line direction; the number of the coating wheelset is at lest two, and various coating wheelsets are arranged longitudinally, and are not necessarily disposed on a straight line and may be distributed in a stepped or staggered form; the number of the drying oven in the invention is only one, and the drying oven is provided with multilayer drying tunnels; the coating wheelsets are disposed aside the drying tunnels; and the drying tunnels are mounted transversely and arranged longitudinally, namely products are subjected to transverse movement in various single drying tunnels and subjected to serpentine movement by being transferred between various drying tunnels and various coating wheelsets.

The length of various drying tunnels may be consistent or inconsistent. For example, in the case of primary coating, as a coating is thin, the drying time is short, and hence the drying tunnel may be shorter; and in the case of secondary coating, as the coating is thick, the corresponding drying tunnel may be longer. Moreover, the drying tunnels may be linear or cambered in shape.

The drying oven is provided with at least one coating drying tunnel and at least one laminating drying tunnel, wherein the coating drying tunnel is used for coating and drying, and the laminating drying tunnel is used for laminating of a specified material layer and hence drying.

The number of the laminating wheelset is one, and the laminating wheelset is mounted at an inlet or an outlet of the drying tunnel and may be optically mounted. Of course, the inlet and the outlet of the drying tunnel in the invention are relative in definition and do not necessarily indicate the front or the rear of the drying oven in the overall linear flow direction but are determined by a single specified flow direction. Therefore, the laminating wheelset may be mounted on the front or at the rear of the drying oven and may also be mounted in the drying oven, which may be determined in view of specified conditions. The following contents are consistent and will not be described further.

The laminating wheelsets may be multiple in number and are respectively mounted at inlets and outlets of the drying tunnels. The laminating operation is usually performed after coating. However, due to the foregoing reason, the longitudinal positions of the laminating wheelsets and the coating wheelsets are not fixed and may be designed in view of different situations.

Moreover, the invention may adopt the proposal that: the laminating wheelset at least includes two rollers to achieve dry laminating or wet laminating. The laminating wheelset as illustrated herein does not refer in particular to all the laminating wheelsets but may be designed as required. The dry laminating mode refers to that products after coating are dried and laminated with specified materials and hence dried again. The wet laminating mode refers to that the products after coating are directly laminated with the specified materials and hence dried, wherein the lamination can also be performed under the half-dried state.

In general, as the two processing modes are different, the positions of the processing rollers are also different. The stacked artificial leather making machine provided by the invention can achieve the dry laminating and the wet laminating on the same equipment. The solutions are as follows:
1. the laminating wheelset is formed by two rollers arranged longitudinally, and the two rollers may move longitudinally; for example, in the case of wet laminating, products after coating and materials pass through from the middle of the two rollers simultaneously to achieve lamination; and in the case of dry laminating, the rollers are driven to move up so that the products after coating are driven to move below the rollers and enter into the drying tunnels for drying, come out and simultaneously pass through from the middle of the two rollers together with the materials to achieve lamination;
2. the laminating wheelset is formed by three rollers arranged longitudinally, and preferably, a roller in the middle may move up and down; for example, in the case of wet laminating, products after coating and materials pass through from the middle of two rollers on the upper portion simultaneously to achieve lamination; and in the case of dry laminating, the products after coating directly pass through from the middle of two rollers on the lower portion and enter into the drying tunnels for drying, and come out and simultaneously pass through from the middle of the two rollers on the upper portion together with the materials to achieve lamination;
3. the laminating wheelset is formed by four rollers arranged longitudinally, and the four rollers are directly divided into two groups in pair; for example, in the case of wet laminating, products after coating and materials pass through from the middle of two rollers on the upper portion simultaneously to achieve lamination; and in the case of dry laminating, the products after coating directly pass through from the middle of two rollers on the lower portion and enter into the drying tunnels for drying, and come out and simultaneously pass through from the middle of the two rollers on the upper portion together with the materials to achieve lamination.

Of course, a mechanism having auxiliary function may also be additionally arranged on the basis of the above three structures.

Each coating wheelset is formed by a roller engaged with a sticker or a roller engaged with a cambered scraper, or consists of a plate, a scraper and a guide wheel.

The stacked artificial leather making machine has the advantages that: as the drying oven adopts the drying tunnels and the coating wheelsets with the stacked arrangement structure and a plurality of groups of drying tunnels are mounted in the same drying oven, the energy can be relatively saved and the floor space of the equipment can be reduced; moreover, as the transverse distance is very short, the precise transmission can be easily achieved; and meanwhile, as the machine is at least one time shorter than the traditional machine, the manufacturing cost of the machine can be much lower.

### BRIEF DESCRIPTION OF THE DRAWINGS

FIG. 1 is a flow diagram of a process for manufacturing artificial leathers in the prior art;
FIG. 2 is a schematic diagram of a first embodiment of the invention;
FIG. 3 is a schematic diagram of a feeding part of the first embodiment;
FIG. 4 is a schematic diagram of a receiving part of the first embodiment;
FIG. 5 is a schematic diagram of a second embodiment of the invention;
FIG. 6 is a schematic diagram of a feeding part of the second embodiment;
FIG. 7 is a schematic diagram of a receiving part of the second embodiment;
FIG. 8 is a schematic diagram of a third embodiment of the invention; and
FIG. 9 is a schematic diagram of a receiving part of the third embodiment.

### DETAILED DESCRIPTION OF THE PREFERRED EMBODIMENTS

Further description is given below to the invention with reference to the accompanying drawings.

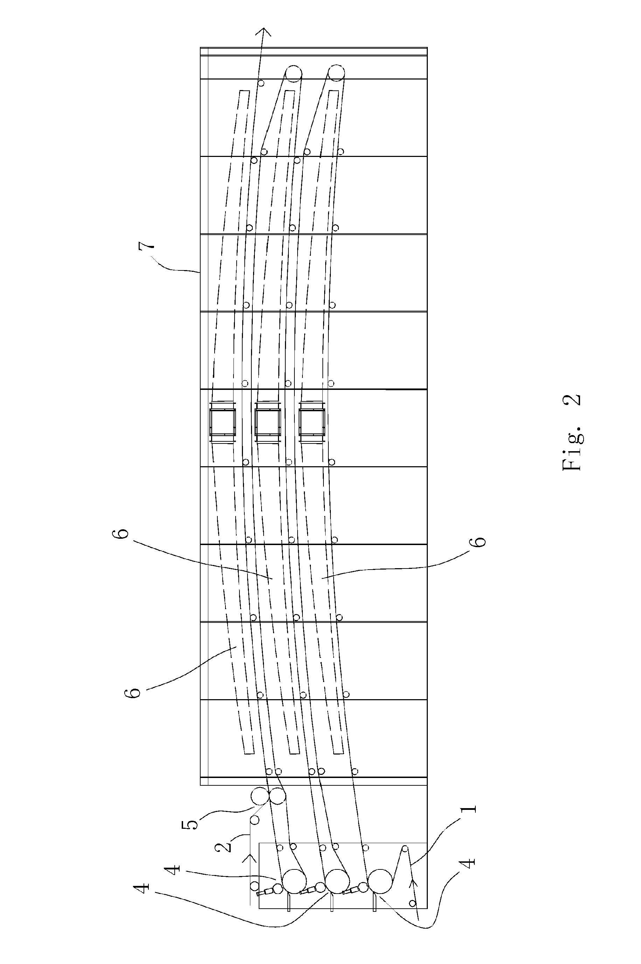

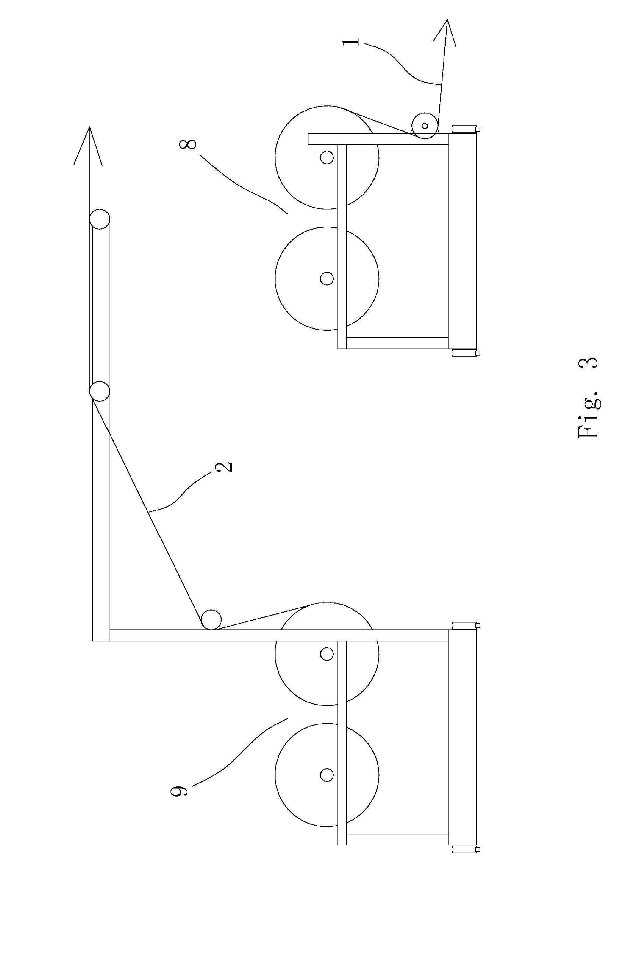

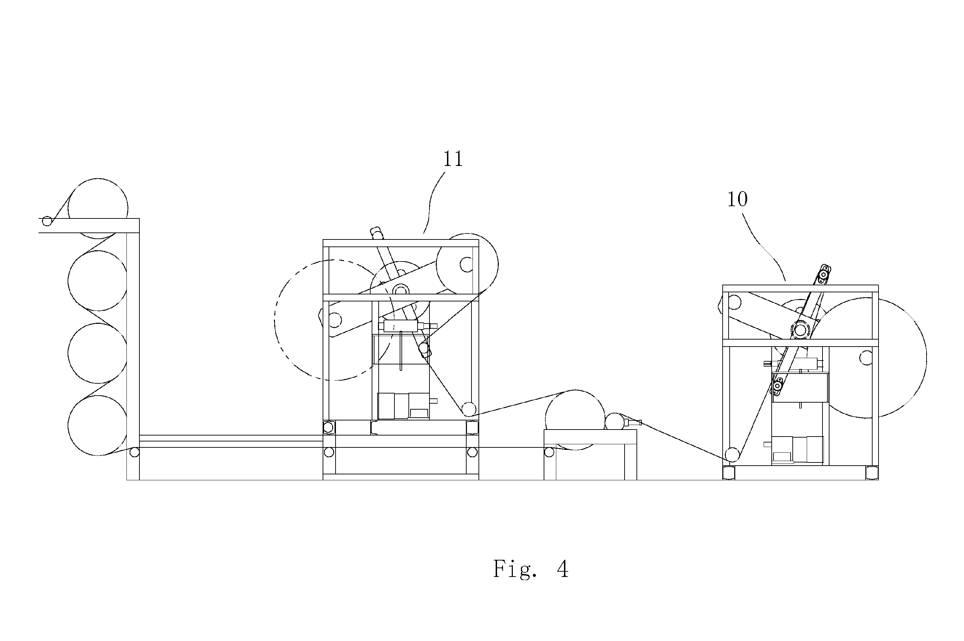

The first embodiment is as illustrated in FIGS. 2 to 4. In the embodiment, the stacked artificial leather making machine comprises a release paper unwinding part 8, a cloth unwinding part 9, three coating wheelsets 4, a drying oven 7, a release paper winding part 10 and a finished product winding part 11, wherein various parts are linearly arranged according to the flow of feeding and unwinding, coating, drying, laminating and winding; the drying oven 7 is provided with three drying tunnels 6 of which the dimensions are basically consistent; the drying tunnels 6 include two coating drying tunnels and a laminating drying tunnel; the three drying tunnels 6 are arranged longitudinally; a plurality of guide wheels used for bearing and conveying raw materials may be arranged inside the drying tunnels 6, may be subjected to antiblocking treatment or adopt cold water run-through design, and can be equipped with power units; the three coating wheelsets 4 are mounted on the same side of the drying oven 7; a release paper 1 passes through a coating wheelset 4 on the bottommost portion and is subjected to front coating; the release paper 1 after coating enters into a coating drying tunnel on the bottommost layer and is dried by hot air; the dried release paper 1 enters into a coating wheelset 4 in the middle in a serpentine way and is coated with a resin filling layer; the release paper 1 after secondary coating enters into a coating drying tunnel in the middle and is dried by hot air; the dried release paper 1 enters into a coating wheelset 4 on the upmost portion, is coated with a contact layer, and is conveyed to the laminating wheelset 5; a cloth 2 passes through a cloth feeding device, a cloth storage device, a preheating device and an unwinding device and is conveyed to the laminating wheelset 5; due to the pressurizing and laminating of laminating pinch rollers, the cloth 2 and the release paper 1 after coating are integrally laminated; the obtained product is dried and fixed by the laminating drying tunnel on the upmost layer and conveyed out by the guide wheels; and subsequently, the obtained product may be subjected to heating and embossing by a heating mantle additionally arranged, or subjected to laminating with a film, edge cutting by a cooling wheel, peeling by a peeling device, to form two layers, namely the artificial leather and the release paper, which are respectively winded into finished products, and the production process is completed.

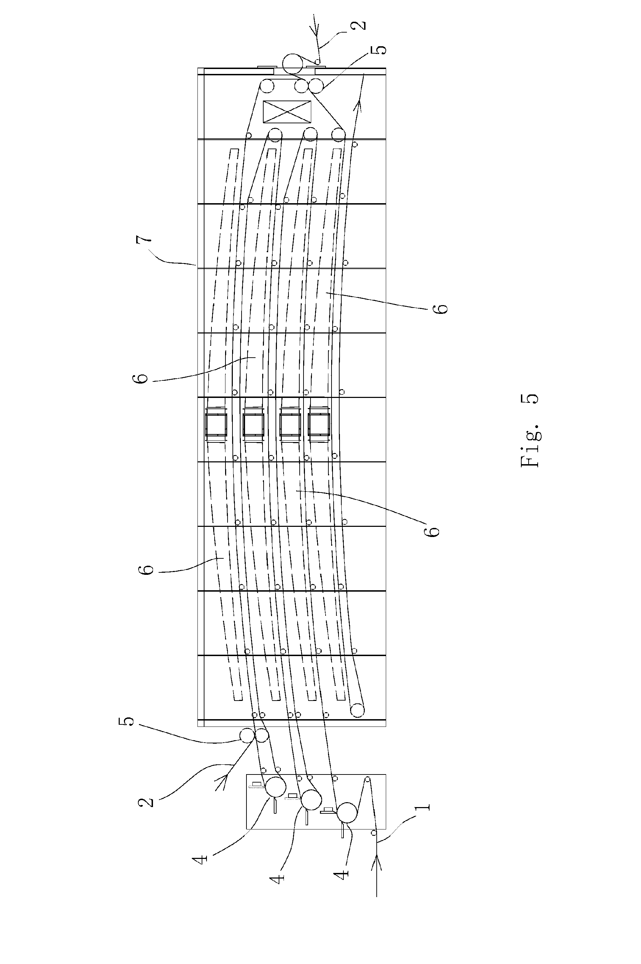

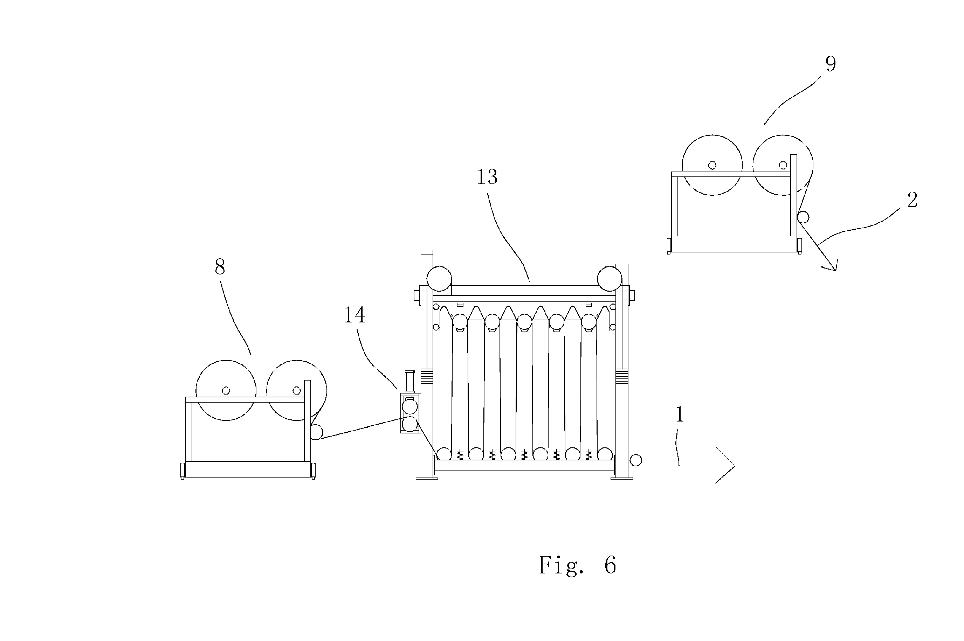

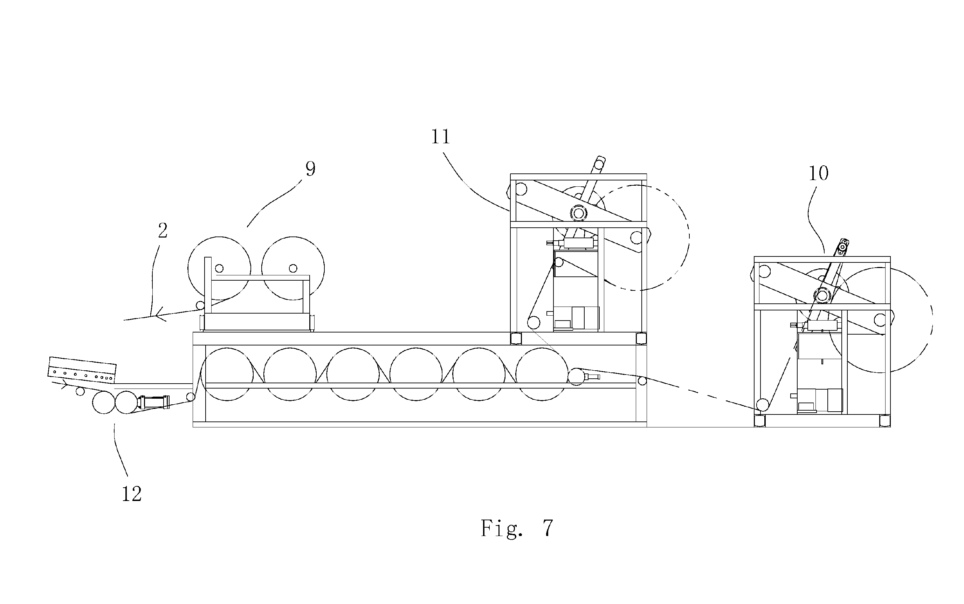

The second embodiment is as illustrated in FIGS. 5 to 7. Coating and drying parts of the embodiment are basically the same with those of the first embodiment. Drying tunnels 6 of the embodiment include two laminating drying tunnels and two coating drying tunnels; various drying tunnels 6 are arranged longitudinally; and a laminating wheelset 5 is respectively mounted at both ends of a drying oven 7 in the processing flow direction. In the case of wet laminating processing, the laminating wheelset 5 on the front of the drying oven 7 is used for laminating a release paper 1 after coating and a cloth 2, and the obtained product is dried by the laminating drying tunnels and conveyed out. In the case of dry laminating processing, the laminating wheelset at the rear of the drying oven 7 is used for laminating the release paper 1 after coating and drying and the cloth 2, and the obtained product is dried by the laminating drying tunnels and conveyed out. In order to be cooperated with the wet and dry laminating process technology, the mounting positions of the laminating wheelsets 5, the laminating drying tunnels and the coating drying tunnels in the invention are not fixed and may be varied according to the production needs. Moreover, the release paper feeding and unwinding part also comprises a paper storage device 13 and a tension control device 14, and an embossing device 12 is also mounted behind the drying part and in front of a separating and winding part. Of course, the accessories may also be mounted on the winding part.

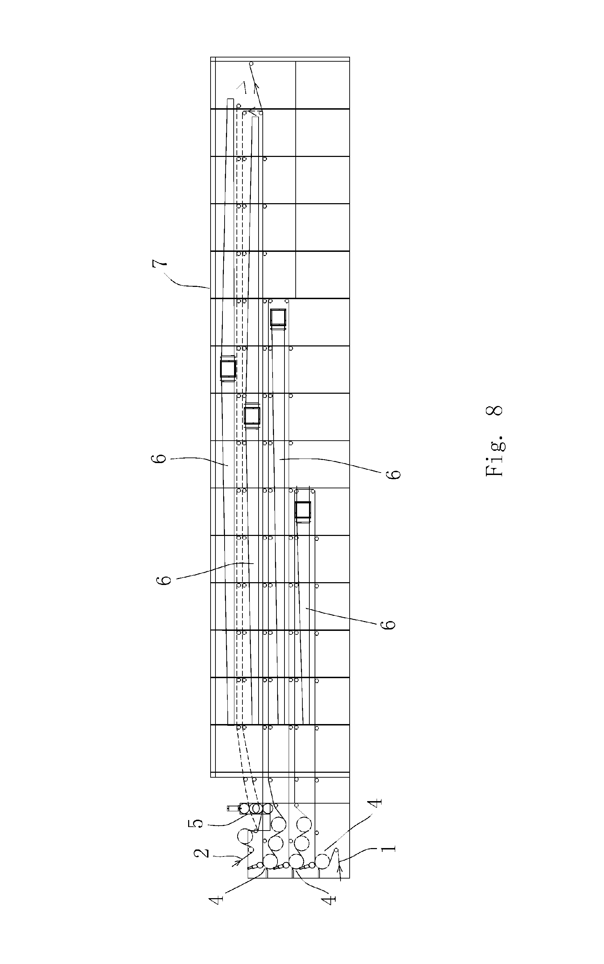

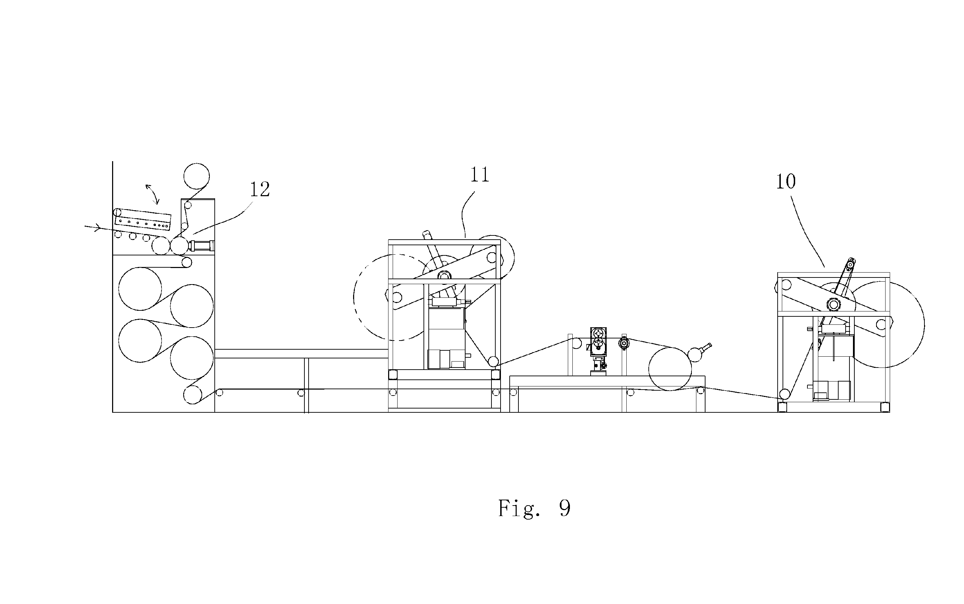

The third embodiment is as illustrated in FIGS. 8 and 9. Coating and drying parts of the embodiment are basically the same with those of the first embodiment, and the structure of a feeding part is the same with that of the second embodiment. The differences are as follows: the number of drying tunnels 6 of the embodiment is four, and the four drying tunnels 6 are arranged longitudinally; meanwhile, the laminating wheelset 5 of the first embodiment is composed of two rollers, but a laminating wheelset 5 of the embodiment may be composed of three rollers which are longitudinally arranged to form two laminating devices; in this case, a roller in the middle may be movable and combined with the other two rollers respectively to form the two laminating devices under different conditions; and meanwhile, the structure of a receiving part is slightly different, but an embossing device 12 is also mounted behind the drying part and in front of a separating and winding part.

As described above, the invention may adopt various different structures of the laminating wheelset 5 to achieve dry laminating processing and wet laminating processing:
wet laminating processing: a release paper 1, processed by the last coating wheelset 4, and a cloth 2 are directly laminated by the laminating wheelset 5, and the obtained product enters into the drying tunnels 6 and is dried and conveyed out;
dry laminating processing: the release paper 1 processed by the last coating wheelset 4 enters into the drying tunnels 6 for drying and is conveyed to the laminating wheelset 5 and laminated with the cloth 2, and the obtained product enters into the drying tunnels 6 again and is dried and conveyed out.

Of course, the number of the coating wheelsets 4 may also be configured to be four. The coating of resins of a foaming layer and a filling layer may be added. The processes of embossing, trimming, peeling and winding will not be described further.

The structures of the embodiment may also be mutually adjusted, for example, the receiving part of the third embodiment can be replaced by the receiving part of the second embodiment.

Moreover, the stacked artificial leather making machine may also be additionally provided with an automatic edge alignment device, a paper receiving device, a paper storage device, a cloth storage device, a tension control device, an unwinding device, a cloth preheating device, an embossing device, a cooling device, a trimming device and the like, so that the performance and the automation degree of the machine can be further improved. The drying tunnels 6 may adopt the heating mode of steam, thermal oil, a hot-blast stove, electric heating and the like, and may also be provided with exhaust devices, circulated air devices, stairs, handrails and the like. The specific structures will not be described in detail herein.

The release paper unwinding part comprises an unwinding frame, a pull-through shaft and a guide wheel; the coating wheelset part comprises a frame, a gummed wheel or a resin base plate, scrapers, guide wheels, chutes, respective adjusting mechanisms thereof and a power unit; the drying tunnel part comprises a frame, multilayer drying tunnels, guide wheels, a heating device and an air channel; and the laminating part is divided into a cloth feeding device and a laminating device and comprises a frame, a pull-through shaft, a guide wheel, a laminating wheelset and a power unit.

The transmission of the release paper from the bottom up is adopted in the accompanying drawings of the invention, and the transmission mode from the top down may also be adopted.

As the production process of artificial leathers may adopt the coating for two times, three times, four times and the like, the coating wheelsets of the machine may be configured into two groups, three groups, four groups and the like according to the actual requirement, and the drying tunnels may be configured into two groups, three groups, four groups and the like according to the actual requirement. As two processes of dry laminating and wet laminating are adopted in the production process of the artificial leathers, the laminating part may be arranged behind the coating part and in front of the drying part and may also be arranged behind the coating part and the drying part according to different requirements, and of course, may also be respectively arranged at the two positions so as to satisfy different application processes.

Various drying tunnels 6 of the invention may share the same heat source and may also adopt independent heat sources.

The stacked artificial leather making machine provided by the invention has the advantages of easy operation, simple control, reduced production cost of the machine, reduced floor space of plants, reduced daily operating cost, improved efficiency and greatly reduced production cost.

Of course, the above embodiments are only preferred embodiments of the invention and not construed as to limit the scope of the invention. Accordingly, equivalent changes or modifications made to the structures, characteristics and principles within the scope of the invention should all fall within the scope of protection of the invention.

## Claims

1. A stacked artificial leather making machine, comprising a laminating wheelset (5), a drying oven (7) and a plurality of coating wheelsets (4), wherein the coating wheelsets (4) disposed at an inlet end of the drying oven (7) in the production line and arranged longitudinally; multilayer drying tunnels (6) formed in the drying oven (7); the coating wheelsets (4) disposed aside the drying tunnels (6) being transversely mounted and longitudinally arranged;
the laminating wheelset (5) formed by a plurality of rollers arranged longitudinally;
the distance between various rollers capable of being mutually adjusted; and the conversion between wet laminating and dry laminating capable of being achieved by the adjustment of the distance between the rollers.

2. The stacked artificial leather making machine according to claim 1, **characterized in that** the laminating wheelset (5) is formed by two rollers arranged longitudinally, the two rollers being able to move longitudinally; products after coating and materials passing through from the middle of the two rollers simultaneously to achieve lamination in the case of wet laminating; and the rollers being driven to move up so that the products after coating are driven to move below the rollers and enter into the drying tunnels (6) for drying, come out and simultaneously pass through from the middle of the two rollers together with the materials to achieve lamination in the case of dry laminating.

3. The stacked artificial leather making machine according to claim 1, **characterized in that** the laminating wheelset (5) is formed by three rollers arranged longitudinally, and a roller in the middle is able move up and down;
products after coating and materials passing through from the middle of two rollers on the upper portion simultaneously to achieve lamination in the case of wet laminating; and the products after coating directly passing through from the middle of two rollers on the lower portion and entering into the drying tunnels (6) for drying, and coming out and simultaneously passing through from the middle of the two rollers on the upper portion together with the materials to achieve lamination in the case of dry laminating.

4. The stacked artificial leather making machine according to claim 1, **characterized in that** the laminating wheelset (5) is formed by four rollers arranged longitudinally, and the four rollers are divided into two groups in pair; products after coating and materials passing through from the middle of two rollers on the upper portion simultaneously to achieve lamination in the case of wet laminating; and the products after coating directly passing through from the middle of two rollers on the lower portion and entering into the drying tunnels (6) for drying, and coming out and simultaneously passing through from the middle of the two rollers on the upper portion together with the materials to achieve lamination in the case of dry laminating.

5. The stacked artificial leather making machine according to any preceding claim, wherein the drying oven (7) is provided with at least one coating drying tunnel and at least one laminating drying tunnel.

6. The stacked artificial leather making machine according to any preceding claim, **characterized in that** the number of the laminating wheelset (5) is one, and the laminating wheelset (5) is mounted at an inlet or an outlet of the drying tunnel (6).

7. The stacked artificial leather making machine according to anyone of claims 1 to 5, **characterized in that** the laminating wheelsets (5) are multiple in number and respectively mounted at inlets and outlets of the drying tunnels (6).

8. The stacked artificial leather making machine according to any preceding claim, **characterized in that** each coating wheelset (4) is formed by a roller wheel engaged with a sticker.

9. The stacked artificial leather making machine according to anyone of claims 1 to 7, **characterized in that** each coating wheelset (4) is formed by a roller wheel engaged with a cambered scraper.

10. The stacked artificial leather making machine according to anyone of claims 1 to 7, **characterized in that** each coating wheelset (4) comprises a plate, a scraper and a guide wheel.
